# EUROPEAN PATENT SPECIFICATION

(11) **EP 0 504 901 B1**
(45) Date of publication and mention of the grant of the patent: **20.05.1998**
(21) Application number: 92104819.5
(22) Date of filing: 19.03.1992
(51) Int. Cl.: H04N 9/64

(54) **Chrominance signal processing circuit**
Chrominanzsignalverarbeitungsschaltung
Circuit de traitement de signal de chrominance

(30) Priority: 20.03.1991 JP 57189/91
(43) Date of publication of application: 23.09.1992
(73) Proprietor: SANYO ELECTRIC CO., LTD., Moriguchi-shi, Osaka (JP)
(72) Inventor: Ueki, Keijiro, Oizumi-Machi, Ora-Gun, Gunma-Ken 370-05 (JP)
(74) Representative: Glawe, Delfs, Moll & Partner

(56) References cited:
- US-A- 4 233 622
- PATENT ABSTRACTS OF JAPAN vol. 12, no. 158 (E-608)13 May 1988 & JP-A-62269 592 (SANYO ELECTRIC CO LTD)
- PATENT ABSTRACTS OF JAPAN vol. 2, no. 42 (E-23)20 March 1978 & JP-A-53 006 534 (TOSHIBA CORP)

## Description

### BACKGROUND OF THE INVENTION

### Field of the Invention:

The present invention relates to a chrominance signal processing circuit capable of demodulating both PAL and SECAM type chrominance signals and particularly to such a circuit having a reduced number of components.

A chrominance signal processing circuit according to the preamble part of the claim 1 is known from JP-A-62 269 592. This circuit is capable of demodulating both the SECAM and PAL types of chrominance signals.

### Description of the Related Art:

There is known a chrominance signal processing circuit adapted to convert a SECAM type chrominance signal into a PAL type chrominance signal which is in turn demodulated by a PAL type demodulator. Such a chrominance signal processing circuit does not require circuitry for processing the SECAM type chrominance signal, resulting in a reduction in the number of components. In areas where both types of chrominance signals can be received, thus, television receiver sets having such chrominance signal processing circuits are currently used. One of such chrominance signal processing circuits is described, for example, in Japanese Patent Laid-Open No. Sho JP-A-53-6534.

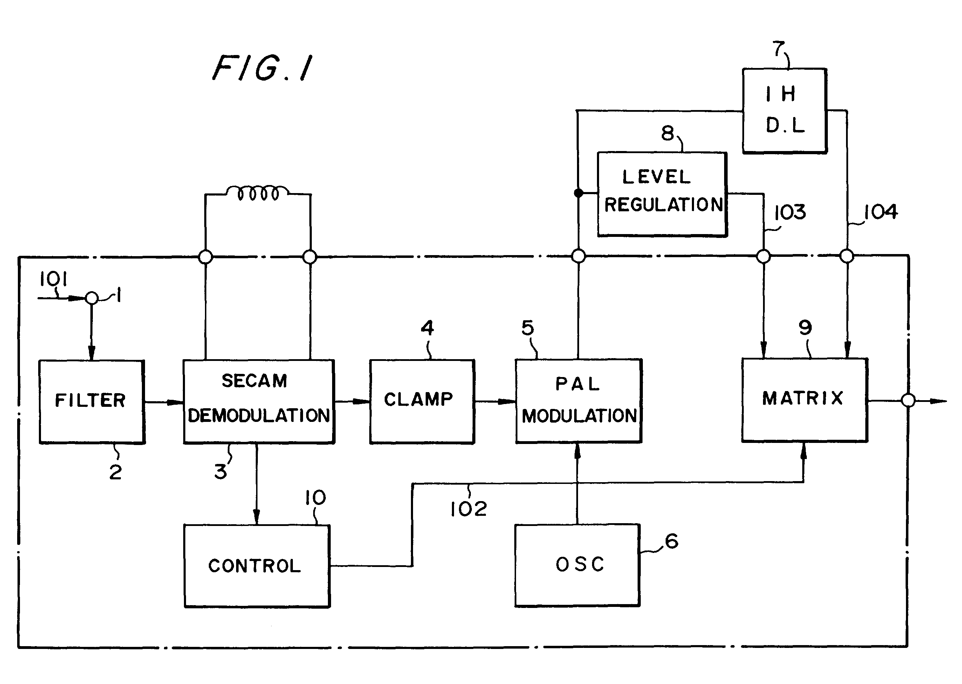

Referring now to Fig. 1, there is shown a transcoder included in such a chrominance signal processing circuit, which can convert a SECAM type chrominance signal into a PAL type chrominance signal and is contained in an integrated circuit shown enclosed by a broken line.

The SECAM type system frequency-modulates color difference signals (R-Y) and (B-Y) sequentially for each horizontal line and overlays the frequency-modulated signals on luminance signals while the PAL type system amplitude-modulates color difference signals (R-Y) and (B-Y) while inverting the phase of the (R-Y) signal for each horizontal line, the amplitude-modulated signals being then overlaid on luminance signals.

Referring again to Fig. 1, the transcoder comprises a filter 2 which functions to pass only a chrominance signal therethrough when a SECAM type composite video signal 101 is applied to the input terminal 1 of the transcoder; a SECAM demodulator 3 for demodulating a frequency-modulated chrominance signal; a clamping circuit 4 for clamping the demodulated chrominance signal; a PAL modulator 5 for amplitude-modulating the clamped chrominance signal into a PAL signal; and an oscillator 6 having a frequency which has been set to the subcarrier frequency of the PAL signal (4.43 MHz). The converted PAL signal is fed respectively to a delay circuit 7 and level regulating circuit 8 which are located outside the integrated circuit of the transcoder. The delay circuit 7 is adapted to delay the PAL signal by one horizontal synchronizing signal period. After processed, the PAL signal is again fed to a matrix circuit 9 in the integrated circuit. The integrated circuit further includes a control circuit 10 which is responsive to the output signal of the SECAM demodulator 3 to judge whether the signal 101 being received is an R-Y or a B-Y signal. Thus, the control cir cuit 10 applies control signals 102 inverted for each one horizontal synchronizing signal period to the matrix circuit 9. The matrix circuit 9 performs the addition or subtraction for two inputted chrominance signals and responds to said control signals to output the result of addition or subtraction for each horizontal synchronizing signal period.

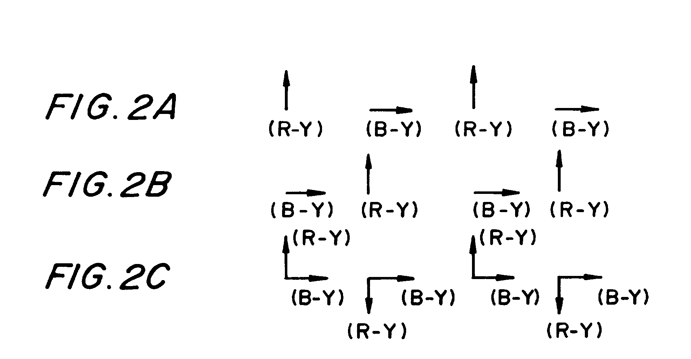

The operation of the matrix circuit 9 will be described with reference to Figs. 2A - 2C. Fig. 2A shows an output signal 103 from the level regulating circuit 8, including amplitude-modulated R-Y and B-Y signal components each of which is fed to the matrix circuit 9 for each horizontal synchronizing signal period. Fig. 2B shows an output signal 104 from the delay circuit 7, which is obtained by delaying the respective one of the signal components shown in Fig. 2A by one horizontal synchronizing signal period. Fig. 2C shows an output signal from the matrix circuit 9, which is provided by adding the signal of Fig. 2A to the signal of Fig. 2B in a first horizontal synchronizing signal period and subtracting the signal of Fig. 2B from the signal of Fig. 2A in the next horizontal synchronizing signal period. Such addition and subtraction operations are subsequently repeated in the matrix circuit 9 to form PAL type chrominance signals in which the phase of the R-Y signal components is inverted for each horizontal line, as shown in Fig. 2C. If the signal of Fig. 2C is applied to the PAL type demodulating circuit, one can provide a PAL type television receiver set which can receive SECAM signals.

However, the prior art transcoder must have a complicated PAL modulator 5 for converting SECAM signals into PAL signals. Such a PAL modulator 5 requires the insertion of a burst signal having its phase of 135 degrees (assuming that the phase of the B-Y signal is equal to zero) and another burst signal having its phase of 225 degrees alternately into the chrominance signals for each horizontal synchronizing signal period. It has been thus proposed that a signal having an invariable phase, such as an NTSC type burst signal, is used. If such a signal is inserted into a chrominance signal, the modulated signal could not be demodulated by the PAL demodulating circuit in the subsequent stage. Furthermore, the prior art could not sometimes reproduce colors inherent in SECAM signals when the R-Y and B-Y signals were combined together.

To overcome the disadvantages of the prior art circuits the present invention is characterized by the features of claim 1.

In accordance with the present invention, a burst signal having its invariable phase (180 degrees) is inserted into the demodulated SECAM signal and at the same time the B-Y and R-Y signals are respectively modulated by carriers having phases of 0 and 90 degrees. The SECAM signals thus modulated are alternately outputted from the signal converting circuit for each horizontal synchronizing signal period after they have been compared with a signal from one horizontal synchronizing signal period before. In these outputted color difference signals, the R-Y and B-Y signal components are completely separated from each other. Thus, the signals can be demodulated by the PAL demodulator.

The chrominance signal processing circuit of the present invention is also characterized by the fact that it comprises an oscillator adapted to oscillate in synchronism with the burst signal from the switch; an ID circuit for discriminating the phase of the burst signal from the switch; and an inverting circuit for sequentially inverting signals outputted from the oscillator in response to the output signal of the ID circuit. Further, if the discriminating circuit judges that the inputted chrominance signal is of PAL type, a signal having its invariable phase is supplied from the oscillator to the B-Y demodulating circuit and the inverting circuit is actuated so as to supply a signal having its phase inverted for each horizontal synchronizing signal period to the R-Y demodulating circuit while if the discriminating circuit judges that the inputted chrominance signal is of SECAM type, the signal having its invariable phase is supplied to the B-Y and R-Y demodulating circuits.

The chrominance signal processing circuit of the present invention is further characterized by the fact that the carriers used in the modulating means to modulate the chrominance signal are at a phase of 0 degrees for the B-Y signal components and 90 degrees for the R-Y signal components and that the phase of the burst signal inserted in the modulating means is equal to 180 degrees.

Thus, the insertion of the burst signal can be facilitated and the demodulating signal generating circuit used in the subsequent stage can be simplified in construction.

The oscillator is characterized by the fact that it output signals have substantially the same phase for both of the burst signals which are contained in the inputted chrominance signal and inserted in the modulating means.

In such an arrangement, there is not required any complicated demodulating circuit even if the burst signal inserted in the modulating means has a invariable phase.

### BRIEF DESCRIPTION OF THE DRAWINGS

Fig. 1 is a block diagram of a chrominance signal processing circuit constructed in accordance with the prior art.

Figs. 2A, 2B and 2C are vector diagrams for illustrating the arrangement of Fig. 1.

Fig. 3 is a block diagram of a chrominance signal processing circuit constructed in accordance with the present invention.

Fig. 4 is a detailed circuit diagram of the signal converting circuit shown in Fig. 3.

Figs. 5A - 5D are vector diagrams for illustrating the arrangement of Fig. 3.

Fig. 6 is a detailed circuit diagram of the modulating circuit shown in Fig. 3.

Figs. 7A - 7E are vector diagrams for illustrating the arrangement of Fig. 3.

### DETAILED DESCRIPTION OF THE PREFERRED EMBODIMENT

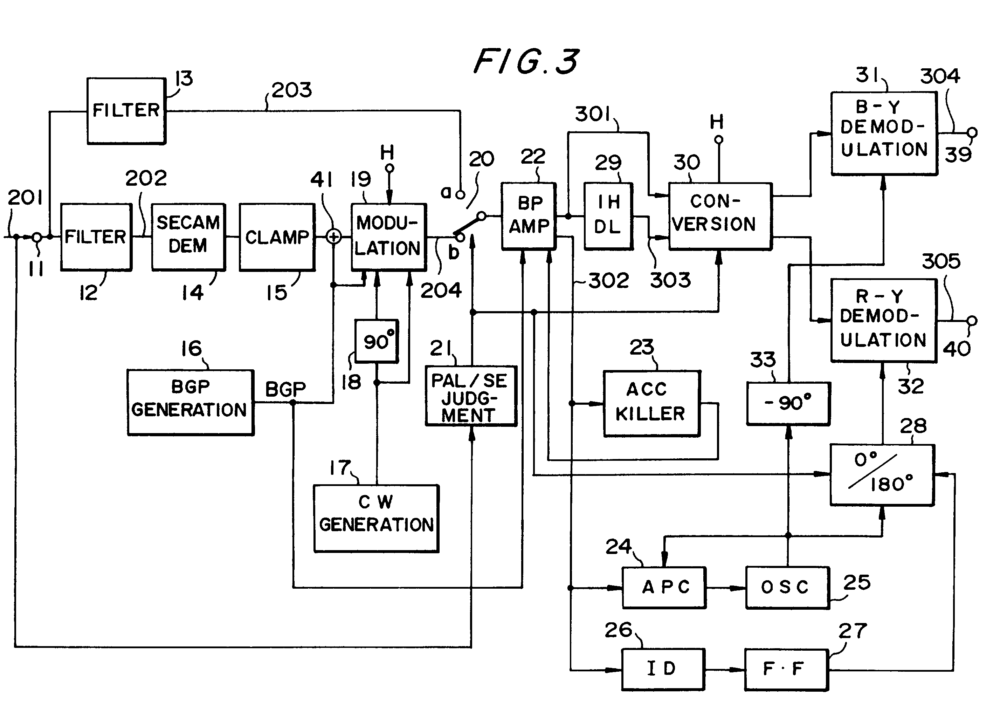

Referring to Fig. 3, there is shown one embodiment of a chrominance signal processing circuit constructed in accordance with the present invention. The chrominance signal processing circuit comprises an input terminal 11 for receiving a composite video signal 201 consisting of either a PAL or a SECAM modulated signal; a bell filter 12 for extracting a chrominance signal 202 from the SECAM signal from the input terminal 11; a band pass filter 13 for extracting a chrominance signal 203 from the PAL signal from the input terminal 11; a SECAM demodulator 14 for frequency-modulating the SECAM signal; a clamping circuit 15; a burst gate pulse generator for overlaying a burst pulse on the clamped SECAM signal; a CW generator 17 for generating carriers of 4.43 MHz; a ninety-degree phase shifter 18; a modulating circuit 19 for amplitude-modulating the B-Y and R-Y signal components in the demodulated SECAM signal containing the burst pulse overlaid thereon by the use of carriers having their phases of 0 and 90 degrees, respectively and also for overlaying burst signals having a phase of 180 degrees on the B-Y and R-Y signal components during the burst pulse period; a switch 20 for selectively outputting the PAL signal 203 from the band pass filter 13 or a signal 204 obtained by demodulating and amplitude-modulating the SECAM signal from the modulating circuit 19 in response to a judgment signal from a PAL/SECAM discriminator 21; a band pass amplifier 22 for separating a burst signal 301 from a chrominance signal 301; an ACC killer circuit 23 for performing automatic color control (ACC) based on the burst signal 302 and the control of color killer for stopping the operation of the band pass amplifier 22 on receiving mono-chrominance television signals; an automatic phase control (APC) circuit 24 for locking and driving an oscillator 25 for the burst signal 302; an ID circuit 26 for identifying whether the phase of the burst signal 302 in the PAL type chrominance signal is now 135 or 225 degrees, in response to the burst signal 302; a flip flop (FF) 27; an inverting circuit 28 for converting the output of the oscillator 25 into 0 or 180 degrees in response to the output of the flip flop 27; a delay circuit 29 for delaying the chrominance signal 301 by one horizontal synchronizing signal period; a signal converting circuit 30 for receiving the first output chrominance signal 301 from the band pass amplifier 22 and the second output chrominance signal 303 from the delay circuit 29 and for matrix calculating the signals 301 and 303 in the PAL mode and selectively outputting the signal 301 or 303 for each horizontal synchronizing signal period in the SECAM mode, in response to the judgment signal from the PAL/SECAM discriminator 21; a B-Y demodulator 31 for demodulating the B-Y signal components; and an R-Y demodulator 32 for demodulating the R-Y signal components.

The ninety-degree phase shifter 33 is adapted to shift the phase of the 4.43 MHz signal from the oscillator 25 by 90 degrees and it then supplies the phase shifted signal to the B-Y demodulator.

In Fig. 3, if the conventional PAL signals are being received by the system, the switch 20 is positioned at the side a opposite to the illustrated side. The PAL signal 201 is applied to the band pass amplifier 22 through the band pass filter 13 after the PAL signal has been converted into a chrominance signal 203. The band pass amplifier 22 separates a burst signal from the PAL signal in response to a burst gate pulse BGP from the BGP generating circuit 16 and applies the chrominance signal 301 having no burst signal directly to the signal converting circuit 30. At the same time, the band pass amplifier 22 causes the signal 303 delayed by one horizontal synchronizing signal period in the delay circuit 29 to pass to the signal converting circuit 30. The signal converting circuit 30 is responsive to the output of the PAL/SECAM discriminator 21 (which in this case is a PAL signal) to function as a matrix circuit.

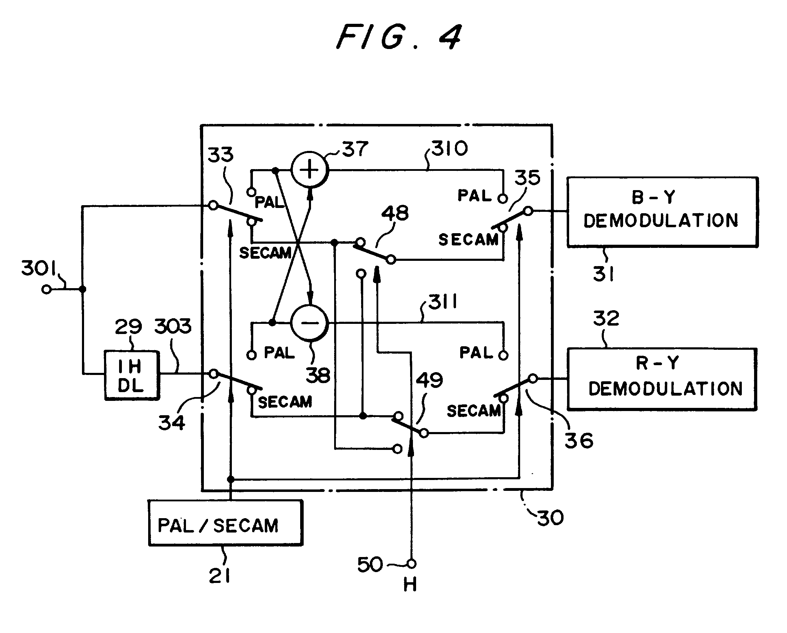

The signal converting circuit 30 will now be described with respect to Fig. 4.

In Fig. 4, the switches 33, 34, 35 and 36 are shifted to the PAL side, opposite to the illustrated side, in response to the judgment result of the PAL/SECAM discriminator 21 indicating that conventional PAL signals are being received. Thus, the signals 301 and 303 are summed at an adder 37 while they are subjected to subtraction at a subtractor 38. The signal 310 resulting from the addition (301+303) is fed to the B-Y demodulator through the switch 35 while the signal 311 resulting from the subtraction (301-303) is applied to the R-Y demodulator 32 through the switch 36.

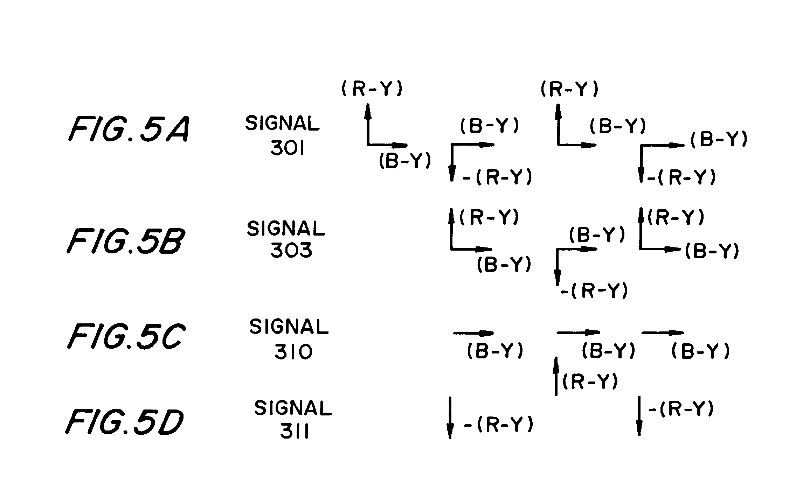

Such a situation will be further described with reference to Figs. 5A - 5D.

Fig. 5A shows a signal 301; Fig. 5B a signal 303; Fig. 5C an addition signal 310 (301+303) and Fig. 5D a subtraction signal 311 (301-303). Signals 310 having an invariable phase (0 degrees) are continuously applied to the B-Y demodulator 31 while the R-Y demodulator 32 receives signals 311 the phase of which is inverted into 90 or 270 degrees for each horizontal synchronizing signal period.

The B-Y demodulator 31 also receives carriers having an invariable phase (0 degrees) from the oscillator 25 while the R-Y demodulator 32 also receives the outputs of the inverting circuit 28 which is inverted in response to the outputs of the flip flop 27. Thus, the R-Y demodulator 32 can detect the signal components -(R-Y) and (R-Y) shown in Fig. 5D as having the same phase.

In such a manner, the first and second output terminals 39 and 40 can obtain PAL type B-Y and R-Y signal components.

The inverting circuit 28 is initiated by the judgment signal (PAL) from the PAL/SECAM discriminator 21 and terminated by the other judgment signal (SECAM).

When the circuit of Fig. 3 receives a frequency-modulated SECAM chrominance signal 202, it is applied to the SECAM demodulator 14 through the input terminal 11 wherein the signal is demodulated before it is clamped by the clamping circuit 15. The clamped SECAM chrominance signal is added with a signal BGP, which is at a lower level during the burst signal period, at the burst pulse generator 16, with the overlaid signal being then provided to the modulating circuit 19.

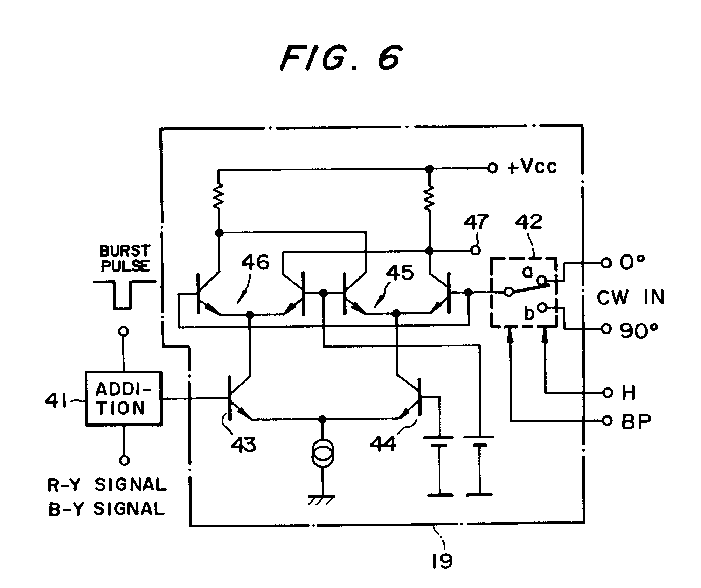

Fig. 6 shows one specific arrangement of the modulating circuit 19 which comprises an adder circuit 41 for receiving and adding the chrominance signal (R-Y or B-Y signal component) from the clamping circuit 15 to the BP signal from the burst pulse generator 16, the sum of these signals being then applied to the modulating circuit 19. During the burst period, the switch 42 is positioned on the side a so that carriers of 0 degrees will be selected from the CW generator 17. On the other hand, a transistor 43 is turned off and a transistor 44 is turned on, in response to the "low level" BP signal. As a result, a differential amplifier 45 is turned on while the operation of a differential amplifier 46 is turned off. Therefore, the zero-degree carriers will be converted to have a phase equal to 180 degrees and will be provided to the output terminal 47.

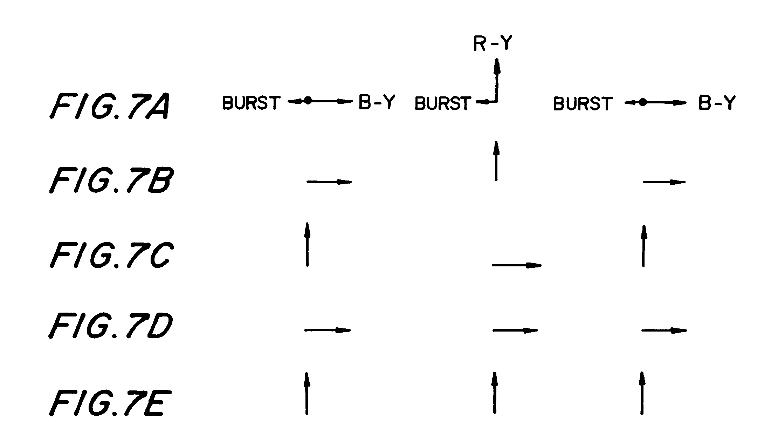

When the circuit enters the B-Y signal cycle, the switch 42 is again shifted to the side a. The collectors of the transistors 43 and 44 will have B-Y signals which are opposite to each other in phase. Thus, the carriers inputted into the differential amplifiers 45 and 46 are amplitude-modulated by the B-Y signals, the amplitude-modulated signals appearing at the output terminals 47. When the circuit enters the R-Y signal cycle, the switch 42 is shifted to the side b so that carriers of 90 degrees will be amplitude-modulated by R-Y signals. Consequently, the output terminals can readily obtain a chrominance signal including burst signal components, as shown in Fig. 7A.

The signal of Fig. 7A is applied to the band pass amplifier 22 through the switch 20 of Fig. 3 wherein the burst signal components are separated from the chrominance signal components. The signal converting circuit 30 receives the chrominance signal 301 of Fig. 7B as well as the chrominance signal 303 of Fig. 7C which has been delayed by the delay circuit 29. As shown in Fig. 4, all the switches 33, 34, 35 and 36 of the signal converting circuit 30 are shifted to the opposite directions. Switches 48 and 49 are also shifted in response to a pulse signal H of one horizontal synchronizing signal period from a terminal 50. Thus, the signals of Figs. 7B and 7C will be extracted alternately for each horizontal synchronizing signal period. As a result, a signal of Fig. 7D occurs at the output end of the switch 48 while a signal of Fig. 7E occurs at the output end of the switch 49. All the signal components of Fig. 7D can be demodulated by the B-Y demodulator 31 since they have been modulated by the zero-degree carriers. All the signal components of Fig. 7E can be demodulated by the R-Y demodulator 32 using the outputs of the inverting circuit 28 which are fixed to one of the selected phases since the signal components have been modulated by the ninety-degree carriers. This is because the phase of the carriers applied to the inverting circuit 28 are inherently offset from that of the B-Y demodulator 31 by 90 degrees. Since each demodulator receives the corresponding color difference signal (e. g. the B-Y demodulator 31 receives only B-Y signals), these two types of color difference signals will not be combined with each other. Therefore, colors can be reproduced in accordance with the characteristics inherent in the SECAM system.

In such a manner, the color difference signals demodulated by the SECAM system can occur at the first and second output terminals 39 and 40.

It is to be noted herein that the BP amplifier 22 is adapted to separate burst signal components from the inputted chrominance signals and also to amplify these chrominance signals to a desired level. Therefore, the BP amplifier 22 can be constituted of a gain controllable amplifier and a switch. By shifting the switch in response to the BGP signal indicative of the BGP period from the BP generator 16, thus, the burst signal components can be supplied to the ACC killer circuit 23, APC circuit 24 and ID circuit 26.

The ID circuit detects the phase of a burst signal component and judges whether it is of 135 or 225 degrees. The judgment result is stored by the flip flop 27.

The APC circuit 24 together with the oscillator 25 are adapted to form a phase locked loop (PLL). The phase locked loop functions to provide a signal having the same frequency as that of the inputted burst signals to the APC circuit 24. If an input signal is a SECAM signal, a burst signal component inputted into the APC circuit 24 has its phase equal to 180 degrees. If the input signal is a PAL type, the phase of the burst signal component is repeatedly changed from 135 degrees to 225 degrees or vice versa for each horizontal synchronizing signal period. In this embodiment, the gain of the APC circuit 23 is selected to be any suitable level such that the phase of the input signal will be synchronized with the input signal having its phase equal to 180 degrees in any event. The output signal of the oscillator 25 will be at a phase of 90 degrees. Thus, a signal having its phase to equal to 0 degrees is supplied to the B-Y demodulator 31 through a minus ninety-degree phase shifter 33. A signal of 90 or 270 degrees is supplied to the R-Y demodulator 32 through the inverting circuit 28.

## Claims

1. A chrominance signal processing circuit capable of demodulating both the SECAM and PAL types of chrominance signals, comprising:
(A) a SECAM demodulating circuit (14) for demodulating a SECAM type chrominance signal;
(B) a modulating circuit (19) for inserting a burst signal having an invariable phase into the SECAM demodulated signal from said SECAM demodulating circuit (14) and for amplitude-modulating two carriers supplied for each horizontal synchronizing signal period by using said SECAM demodulated signal, said carriers having their phases different from each other by 90 degrees;
(C) a switch (20) for selectively outputting the amplitude-modulated signal from said modulating circuit (19) and an inputted PAL Type chrominance signal;
(D) a delay circuit (29) for delaying the output signal from said switch (20) by one horizontal synchronizing signal period;
(E) a discriminating circuit (21) for judging whether the inputted chrominance signal is of PAL or SECAM type;
**characterized** by
(F) a signal converting circuit (30) including a matrix section for receiving a first signal (301) from said switch (20) and a second signal (303) from said delay circuit (29)
and a switch section for sequentially selecting one of said first and second signals for each horizontal synchronizing signal period to output B-Y and R-Y signal components individually to respective B-Y and R-Y demodulators (31, 32) in accordance with the judgement result of said discriminating circuit such that, in the case of a SECAM signal the two signals being input to the signal converting circuit are output unchanged, the B-Y and R-Y demodulators sequentially receiving said first and second signals during successive horizontal synchronizing periods, the B-Y demodulator (31) receiving said first signal (301) when the R-Y demodulator (32) receives said second signal (303) and vice versa, and in the case of a PAL signal the first and second signals (301, 303) are summed (37) and subtracted (38), the summed signal (310) being fed to said B-Y demodulator (31) and the subtracted signal (311) being fed to said R-Y demodulator (32).

2. A chrominance signal processing circuit as defined in claim 1, further comprising an oscillator (25) adapted to oscillate in synchronism with the burst signal from said switch (20); an ID circuit (26) for discriminating the phase of the burst signal from said switch (20); and an inverting circuit (28) for sequentially inverting signals outputted from said oscillator (25) in response to the output signal of said ID circuit (26) and supplying, if said discriminating circuit (21) judges that the inputted chrominance signal is of PAL type, a signal having an invariable phase from said oscillator to said B-Y demodulating circuit (31) and said inverting circuit (28) is actuated so as to supply a signal having its phase inverted for each horizontal synchronizing signal period to said R-Y demodulating circuit (32) and if said discriminating circuit judges that the inputted chrominance signal is of SECAM type, the signal having an invariable phase is supplied to said B-Y and R-Y demodulating circuits (31, 32).

3. A chrominance signal processing circuit as defined in claim 1 wherein the carriers used in said modulating means (19) to modulate the chrominance signal are of a phase of 0 degrees for said B-Y signal components and of 90 degrees for said R-Y signal components and wherein the phase of the burst signal inserted in said modulating means (19) is equal to 180 degrees.

4. A chrominance signal processing circuit as defined in claim 1 wherein said oscillator (25) is adapted to output signals having substantially the same phase for both of the burst signals which are contained in the inputted chrominance signal and inserted in said modulating means (19).

## Patentansprüche

1. Chrominanzsignal-Verarbeitungsschaltung, die sowohl SECAM- als auch PAL-Chrominanzsignale demodulieren kann, mit:
(A) einer SECAM-Demodulationsschaltung (14) zum Demodulieren eines SECAM-Chrominanzsignals;
(B) eine Modulationsschaltung (19) zum Einführen eines Burst-Signals mit einer nichtvariablen Phase in das demodulierte SECAM-Signal von der SECAM-Demodulationsschaltung (14) und zum Amplitudenmodulieren zweier Träger, die für jede horizontale Synchronisationssignalperiode zugeführt werden durch Benutzung des demodulierten SECAM-Signals, wobei die Träger in der Phase voneinander um 90° unterschiedlich sind;
(C) einem Schalter (20) zum wahlweisen Ausgeben des amplitudenmodulierten Signals von der Modulationsschaltung (19) und eines eingegebenes PAL-Chrominanzsignals;
(D) einer Verzögerungsschaltung (29) zum Verzögern des Ausgangssignals vom Schalter (20) um eine horizontale Synchronisationssignalperiode;
(E) einer Diskriminatorschaltung (21) zum Beurteilen, ob das eingegebene Chrominanzsignal ein PAL- oder SECAM-Signal ist;
**gekennzeichnet** durch
(F) eine Signalkonversionsschaltung (30), die einen Matrix-Abschnitt enthält zum Empfangen eines ersten Signals (301) vom Schalter (20) und eines zweiten Signals (303) von der Verzögerungsschaltung (29),
und einen Schalterabschnitt zum sequentiellen Auswählen eines der ersten oder zweiten Signale für jede horizontale Synchronisationssignalperiode, um B-Y und R-Y-Signalkomponenten individuell zu jeweiligen B-Y und R-Y-Demodulatoren (31, 32) auszugeben in Übereinstimmung mit dem Beurteilungsergebnis der Diskriminatorschaltung, so daß, im Falle eines SECAM-Signals die beiden Signale, die zur Signalkonvertierungsschaltung eingegeben sind, unverändert ausgegeben werden, wobei die B-Y und R-Y-Demodulatoren sequentiell das erste und zweite Signal empfangen während aufeinanderfolgender horizontaler Synchronisationsperioden, wobei der B-Y-Demodulator (31) das erste Signal (301) empfängt, wenn der R-Y-Demodulator (32) das zweite Signal (203) empfängt und umgekehrt, und im Falle eines PAL-Signals das erste und zweite Signal (301, 303) summiert (37) und subtrahiert (38) werden, wobei das Summensignal (310) zum B-Y-Demodulator (31) zugeführt wird und das subtrahierte Signal (311) zum R-Y-Demodulator (32) zugeführt wird.

2. Chrominanzsignal-Verarbeitungsschaltung nach Anspruch 1, welche ferner aufweist einen Oszillator (25), der synchron mit dem Burst-Signal vom Schalter (20) oszillieren kann; eine ID-Schaltung (26) zum Erkennen der Phase des Burst-Signals vom Schalter (20) und eine Inverterschaltung (28) zum sequentiellen Invertieren von Signalen, die von dem Oszillator (25) ausgegeben werden in Antwort auf das Ausgangssignal der ID-Schaltung (26) und zum Zuführen, wenn die Diskriminatorschaltung (21) entscheidet, daß das eingegebene Chrominanzsignal ein PAL-Signal ist, ein Signal mit einer nichtvariablen Phase vom Oszillator zu der B-Y-Demodulationsschaltung (31) und wobei die Inverterschaltung (28) aktiviert wird, um ein Signal zuzuführen, dessen Phase invertiert ist, für jede horizontale Synchronisationsignalperiode an die R-Y-Demodulationsschaltung (32) und wenn die Diskriminatorschaltung entscheidet, daß das eingegebene Chrominanzsignal ein SECAM-Signal ist, das Signal mit einer nichtvariablen Phase an die B-Y- und R-Y-Demodulationsschaltung (31, 32) zugeführt wird.

3. Chrominanzsignal-Verarbeitungsschaltung nach Anspruch 1, wobei die Träger, die in der Modulationsvorrichtung (19) verwendet werden, um das Chrominanzsignal zu modulieren, eine Phase von 0° haben für die B-Y-Signalkomponenten und 90° für die R-Y-Signalkomponenten, und wobei die Phase des Burst-Signals, das in der Modulationsvorrichtung (19) eingeführt wird, eine Phase von 180° hat.

4. Chrominanzsignal-Verarbeitungsschaltung nach Anspruch 1, wobei der Oszillator (25) Signale ausgeben kann, die im wesentlichen die gleiche Phase für beide Burst-Signale haben, welche in dem eingegebene Chrominanzsignal enthalten sind und in der Modulationsvorrichtung (19) eingefügt werden.

## Revendications

1. Circuit de traitement de signal de chrominance capable de démoduler à la fois les signaux de chrominance de type SECAM et de type PAL, comprenant :
(A) un circuit de démodulation SECAM (14) destiné à démoduler un signal de chrominance de type SECAM,
(B) un circuit de modulation (19) destiné à insérer un signal de salve présentant une phase invariable dans le signal démodulé de type SECAM provenant dudit circuit de démodulation SECAM (14) et à moduler en amplitude deux porteuses fournies pendant chaque période de signal de synchronisation horizontale en utilisant ledit signal démodulé de type SECAM, lesdites porteuses ayant leurs phases qui diffèrent l'une de l'autre de 90 degrés,
(C) un commutateur (20) destiné à fournir en sortie sélectivement le signal modulé en amplitude provenant dudit circuit de modulation (19) et un signal de chrominance de type PAL reçus en entrée,
(D) un circuit à retard (29) destiné à retarder le signal de sortie provenant dudit commutateur (20) d'une période de signal de synchronisation horizontale,
(E) un circuit de discrimination (21) destiné à évaluer si le signal de chrominance reçu en entrée est du type PAL ou du type SECAM,
caractérisé par
(F) un circuit de conversion de signal (30) comprenant une section matricielle destinée à recevoir un premier signal (301) provenant dudit commutateur (20) et un second signal (303) provenant dudit circuit à retard (29),
et une section de commutateur destiné à sélectionner séquentiellement l'un desdits premier et second signaux pendant chaque période de signal de synchronisation horizontale afin de fournir en sortie des composantes de signaux B-Y et R-Y individuellement à des démodulateurs B-Y et R-Y respectifs (31, 32) conformément au résultat de l'évaluation dudit circuit de discrimination de sorte que, dans le cas d'un signal de type SECAM, les deux signaux reçus à l'entrée du circuit de conversion de signal sont fournis en sortie en étant inchangés, les démodulateurs B-Y et R-Y recevant séquentiellement lesdits premier et second signaux durant des périodes de synchronisation horizontales successives, le démodulateur B-Y (31) recevant ledit premier signal (301) lorsque le démodulateur R-Y (32) reçoit ledit second signal (303) et vice versa, et dans le cas d'un signal de type PAL, les premier et second signaux (301, 303) sont sommés (37) et soustraits (38), le signal de somme (310) étant appliqué audit démodulateur B-Y (31) et le signal soustrait (311) étant appliqué audit démodulateur R-Y (32).

2. Circuit de traitement de signal de chrominance selon la revendication 1, comprenant en outre un oscillateur (25) conçu pour osciller en synchronisme avec le signal de salve provenant dudit commutateur (20) , un circuit d'identification ID (26) destiné à discriminer la phase du signal de salve provenant dudit commutateur (20), et un circuit d'inversion (28) destiné à inverser séquentiellement les signaux fournis en sortie à partir dudit oscillateur (25) en réponse au signal de sortie dudit circuit d'identification (26) et à appliquer, si ledit circuit de discrimination (21) évalue que le signal de chrominance reçu en entrée est de type PAL, un signal présentant une phase invariable provenant dudit oscillateur, audit circuit de démodulation B-Y (31) et ledit circuit d'inversion (28) est actionné de façon à fournir un signal ayant sa phase inversée pendant chaque période de signal de synchronisation horizontale, audit circuit de démodulation R-Y (32) et si ledit circuit de discrimination évalue que le signal de chrominance reçu en entrée est de type SECAM, le signal présentant une phase invariable est appliqué auxdits circuits de démodulation B-Y et R-Y (31, 32).

3. Circuit de traitement de signal de chrominance selon la revendication 1, dans lequel les porteuses utilisées dans ledit moyen de modulation (19) pour moduler le signal de chrominance sont à une phase de 0 degré pour lesdites composantes de signaux B-Y et à 90 degrés pour lesdites composantes de signaux R-Y et dans lequel la phase du signal de salve inséré dans ledit moyen de modulation (19) est égale à 180 degrés.

4. Circuit de traitement de signal de chrominance selon la revendication 1, dans lequel ledit oscillateur (25) est conçu pour fournir en sortie des signaux présentant pratiquement la même phase à la fois pour les signaux de salve qui sont contenus dans le signal de chrominance reçu en entrée et ceux qui sont insérés dans ledit moyen de modulation (19).
